# EUROPEAN PATENT SPECIFICATION

(11) **EP 3 773 009 B1**
(45) Date of publication and mention of the grant of the patent: **29.01.2025**
(21) Application number: 19713086.7
(22) Date of filing: 01.04.2019
(51) Int. Cl.: A23L 29/212, A23L 27/40, A23L 23/10, A23P 10/25, A23P 10/28, A23P 30/10, A23P 10/20, A23L 29/00, A23L 29/219, A21D 2/02

(54) **PROCESS FOR PREPARING A SALT-STARCH POWDER WITH BINDING PROPERTIES**
VERFAHREN ZUR HERSTELLUNG EINES SALZ-STÄRKE-PULVERS MIT BINDUNGSEIGENSCHAFTEN
PROCÉDÉ DE PRÉPARATION D'UNE POUDRE SEL-AMIDON À PROPRIÉTÉS DE LIAISON

(30) Priority: 06.04.2018 EP 18166017
(43) Date of publication of application: 17.02.2021
(73) Proprietor: Société des Produits Nestlé S.A., 1800 Vevey (CH)
(72) Inventor: GADDIPATI, Sanyasi, Beachwood OH 44122 (US); PERDANA, Jimmy, 78224 Singen (DE); KIM, Youngbin, 73525 Schwäbisch Gmünd (DE); BOBE, Ulrich, 78247 Hilzingen (DE); SCHROEDER, Volker, 88633 Heiligenberg (DE)
(74) Representative: Dinger, Hansjörg
(86) International application number: PCT/EP2019/058184
(87) International publication number: WO 2019/192960

(56) References cited:
- EP-A1- 1 269 862
- EP-A1- 1 269 864
- EP-A1- 2 534 956
- WO-A1-2007/085609
- WO-A1-2009/028773
- WO-A1-2009/075575
- WO-A1-2011/069885
- WO-A2-2006/101945
- BR-A2- 102012 029 522
- CA-A1- 2 441 956
- CN-A- 102 240 022
- GB-A- 1 168 692
- GB-A- 1 470 646
- US-A- 2 441 409
- US-A- 4 812 445
- DATABASE WPI Week 201204, 16 November 2011 Derwent World Patents Index; AN 2011-Q63994, XP002782813
- DATABASE WPI Week 201523, 16 September 2014 Derwent World Patents Index; AN 2015-151289, XP002782814

## Description

### Field of the Invention

The present invention relates to a process for preparing a salt-starch powder with binding properties. The process comprises mixing salt, starch and water before, during or after dissolution of the salt in the water, followed by drying the mixture and milling to obtain a salt-starch powder.

### Background of the Invention

Salt, or sodium chloride (NaCl), has been used as a food preservative and a seasoning agent for years and years. In certain cultures, in which prepared foods are widely consumed, salt has become the most widely used seasoning agent, so much so that it is arguably used more than it should be or at least more than might be recommended for maintaining healthy eating practices. Salt is also the main ingredient in a bouillon tablet/cube. A bouillon tablet formed by compressing ingredients into a tablet shape, for example a cube, is widely used as a concentrate to prepare a bouillon, a broth or a soup. The bouillon tablet is normally added to a hot aqueous solution, allowing it to dissolve. In addition, a bouillon tablet may be used when preparing other dishes, as a seasoning product. The dissolution time of bouillon tablets highly depends on its degree of compaction which can be measured / expressed by the hardness of such a product. The reason to compact powders in a regular form presents several advantages for the commercialisation (e.g. reduction of volume, optimisation of packaging material usage, shelf life and convenience). A habit developed by users of bouillon tablets is the crumbling of the tablet or cube into the dish during preparation process either to ensure good distribution and or to accelerate its dissolution time in the cooking water. This crumbliness is one of the attributes that needs to be ensured during shelf life and therefore a post-hardening of the tablet or cube has to be avoided. A minimum hardness is necessary to allow a wrapping of the tablet. A maximum hardness ensures that a normal user can break the tablet within fingers without the use of additional tools or appliances. A typical bouillon tablet or bouillon cube comprises salts, taste enhancing compounds like monosodium glutamate (MSG), sugars, starch or flour, fat, flavouring components, vegetables, meat extracts, spices, colourants etc. The amounts of the respective compounds may vary depending on the specific purpose of the product, the market or taste of the consumer that is aimed at.

A conventional way of manufacturing bouillon tablets comprises mixing powdered bouillon components with fat and pressing the mix into a tablet. In this type of bouillon tablet the fat is the main ingredient holding the structure together.

Nowadays there is a nutritional trend to avoid or at least reduce the consumption of fats rich in saturated fatty acids and to preferably consume oils rich in monounsaturated fatty acids and/or polyunsaturated fatty acids. WO2004/049831 describes how it is possible to have very little solid fat entrapped in a hard bouillon tablet provided the tablet also comprises crystals, a filler and a sticking agent. The sticking agent may comprise ingredients the addition of which (combined with an adequate increase of the water activity) impart a glass transition temperature to the final mixture which may be relatively easily exceeded during tableting. Such ingredients include meat extract, processed flavours and/or vegetables extracts.

Sticking agents used to bind together bouillon cubes with low fat contents are typically hygroscopic amorphous ingredients. These are activated in the bouillon mixture by the addition of water. This process of water addition can be problematic, for example it is difficult to ensure homogenous distribution of the water and a storage time up to 24 hours is needed to reach a water activity equilibrium. Crust formation may occur which requires stopping the mixer for cleaning. Sometimes lumps are formed in the mixtures which causes quality defects in the finished pressed tablets. In addition, post hardening of the bouillon tablet may occur.

WO2009/075575 discloses a method for agglomerating starch comprising mixing of starch with an aqueous solution comprising a salt and drying the mixture, wherein a temperature above 60°C shouldn't' exceed.

WO2011/069885 discloses a process to produce a granular savoury food concentrate comprising from 10 to 65 wt.% of salt, from 1 to 20 wt.% of yeast extract and from 10 to 50 wt.% of flour, starch or a mixture thereof, wherein the granular food concentrate is not in a glassy state.

US4812445 discloses that any material may be encapsulated in a starch matrix by combining the material with a high temperature-stabilized dispersion of starch, optionally in the presence of salt. The temperature-stabilized starch dispersion acts as a protective colloid, encasing the material to be encapsulated. Upon subsequent rapid cooling of this mixture on a chilled surface the starch polymer chains collapse upon themselves, forming a firm sheet or the like and encapsulating the core material.

Hence, there is a persisting need in the art to find improved processes for forming bouillon tablets, especially bouillon tablets which use a new binding system despite the well-known binding system of amorphous binding and/or fat binding.

### Summary of the invention

An object of the present invention is to improve the state of the art and to provide an improved solution to overcome at least some of the inconveniences described above or at least to provide a useful alternative. The object of the present invention is achieved by the subject matter of the independent claims. The dependent claims further develop the idea of the present invention.

Accordingly, the present invention provides in a first aspect a process for the production of a salt-starch powder, the process comprising the steps of:
a) mixing salt, starch and water before, during or after dissolution of the salt in the water;
b) drying the mixture of step a) to obtain a dry salt-starch mass; and
c) milling the dry salt-starch mass to obtain a salt-starch powder;

wherein the salt is selected from the group consisting of sodium chloride, potassium chloride, ammonium chloride or a combination thereof and
wherein the salt-starch powder comprises 18 to 82wt% salt and 18 to 82wt% starch and wherein the salt is dissolved in the water at a ratio between 1:2.8 to 1:20 and wherein the drying is done at a temperature between 65 to 120°C.

It has been surprisingly found by the inventors that using a co-processed salt-starch powder has very good flow-ability values and provides an efficient new binding system e.g. in a bouillon tablet.

The use of the salt-starch powder increases the hardness of bouillon tablets/cubes after pressing. The obtained hardness can exceed the hardness that is commonly observed during pressing of bouillon cubes/tablets. At the same time, the produced bouillon products can still be crumbled. So far, such a behaviour has not been observed for comparable hardness values. This strongly indicates that a different and new binding mechanism is present. Due to this, cubes/tablets can be easily produced (high hardness advantageous for manufacturing) but at the same time show good crumbliness. Crumbliness is a key Driver of liking for consumers and is thus desired. In addition the bouillon tablets/cubes has a faster dissolution time compared to standard bouillon tablets/cubes. This is very surprising as due to the higher hardness a slower dissolution time is expected.

In addition the salt-starch powder is used to produce bouillon cubes with reduced salt content (e.g. between 10 to 50% reduction). It was surprisingly found that cubes/tablets could be pressed even though a high fibre content was used (fibres are elastic and can lead to capping/breakage after pressing). This behaviour might be explained by the entrapment of salt in starch. It enables the use of higher contents of starch in applications. It should also be mentioned that the flow-ability is positively influenced by using the salt-starch powder compared to pure fibres.

### Detailed Description of the invention

Consequently the present invention relates to a process for the production of a salt-starch powder, the process comprising the steps of:
a) mixing salt, starch and water before, during or after dissolution of the salt in the water;
b) drying the mixture of step a) to obtain a dry salt-starch mass; and
c) milling the dry salt-starch mass to obtain a salt-starch powder;

wherein the salt is selected from the group consisting of sodium chloride, potassium chloride, ammonium chloride or a combination thereof and
wherein the salt-starch powder comprises 18 to 82wt% salt and 18 to 82wt% starch and wherein the salt is dissolved in the water at a ratio between 1:2.8 to 1:20 and wherein the drying is done at a temperature between 65 to 120°C.

In an embodiment the present invention relates to a process for the production of a salt-starch powder, the process comprising the steps of:
a) mixing salt, starch and water before, during or after dissolution of the salt in the water;
b) optionally heating the mixture to a temperature between 60-100°C for 0.5-15 min;
c) drying the mixture of step a) to obtain a dry salt-starch mass; and
d) milling the dry salt-starch mass to obtain a salt-starch powder;

wherein the salt is selected from the group consisting of sodium chloride, potassium chloride, ammonium chloride or a combination thereof and
wherein the salt-starch powder comprises 18 to 82wt% salt and 18 to 82wt% starch and wherein the salt is dissolved in the water at a ratio between 1:2.8 to 1:20 and wherein the drying is done at a temperature between 65 to 120°C.

Embodiments relating to the salt-starch powder and its ingredients, are not encompassed by the wording of the claims, but are considered as useful for understanding the invention.

"Salt" according to this invention means edible salts capable of imparting or enhancing a salty taste perception. Salt is selected from the group consisting of sodium chloride, potassium chloride, ammonium chloride or a combination thereof, more preferably sodium chloride.

The term "dissolution" according to this invention means that salt is dissolved within water. In an embodiment salt is dissolved in water at a ratio between 1:2.8 to 1:20, preferably 1:2.8 to 1:20, preferably 1:2.8 to 1:15, preferably 1:2.8 to 1:10, preferably 1:2.8 to 1:6, preferably 1:3 to 1:20, preferably 1:3 to 1:15, preferably 1:3 to 1:10, preferably 1:3 to 1:6, preferably 1:4 to 1:20, preferably 1:4 to 1:15, preferably 1:4 to 1:10, preferably 1:4 to 1:6. In a preferred embodiment a saturated water-salt solution is obtained. In an embodiment the starch and the water are mixed after dissolution of the salt in the water.

"Starch" according to this invention has two main polysaccharides amylose and amylopectin. Starches granules can be isolated from a wide variety of plant sources, consisting of tuberous root, tuber and seeds. Based on the botanical origin, starch granules come in different shapes, sizes and have varying ratios of amylose/amylopectin. Starch according to this invention is a native starch, flour, pre-gelatinized starch or cold swelling starch or combination thereof. The starch according to the invention is selected from the group consisting of maize, waxy maize, high amylose maize, wheat, tapioca, rice, potato, cassava or combinations of these. Corresponding flours can also be used as a source of starch. The person skilled in the art is calculating based on the amount of starch how much flour has to be used to fall within this invention. Native starch is defined as a starch granule in its native form in the nature; isolated using the extraction processes, or commercially sourced as native starch occurs naturally is insoluble in cold water. Native starch granule is in a semi-crystalline form and have a crystallinity varying from 15 to 45%. Other prominent feature of a native starch granule is its presence of Maltese cross when observed under polarized light. Due to the presence of the order in the native starch, it exhibits birefringence under polarized light. Gelatinized starch is the native starch, which undergoes gelatinisation process. The gelatinization process, occurs when the native starch granules are heated progressively to higher temperatures in the presence of excess of water, the granules begin to irreversibly swell and there is a point at which the Maltese cross of the native granules disappears. During gelatinisation several events occur simultaneously. There are three distinct stages that occur in the gelatinization process: (i) granular swelling by slow water absorption; (ii) followed by a rapid loss of birefringence via the absorption of large amounts of water by the granules; and (iii) finally, leaching of the soluble portion into the solution, transforming the granules into formless sacs. Size, shape of the granule and the loss of birefringence are the distinctive feature of the gelatinized starch. Gelatinized starch can be sourced commercially as pre-gelatinized starch. Swollen starch granule or partly gelatinized is produced when the native starch granules are heated progressively to higher temperatures in the presence of excess of water; the granules begin to irreversibly swell and Swollen starch granule or partly gelatinized is an intermediate stage between the native starch granule form and gelatinisation. The granules in the swollen form have a larger granular size than the native starch granule and could have a partial or complete loss of birefringence.

"Salt-starch mass" or "salt-starch powder" according to this invention is an aggregation of starch, wherein the salt crystallizes in, on and through the aggregated starch having a surface protrusion of salt with a particle size of salt between 0.5-50µm, preferably 0.5-30µm, preferably 0.5-10µm, preferably 1-50µm, preferably 1-30µm, preferably 1-10µm, preferably 1.5-50µm, preferably 1.5-30µm, preferably 1.5-10µm, preferably 2-50 µm, preferably 2-30µm, preferably 2-10µm. The salt-starch powder is not hallow. The dry salt-starch mass has particle size distribution with a median diameter Dv50 in the range of 20 to 1500µm, preferably in the range of 50 to 1000µm, preferably in the range of 50 to 500µm, preferably in the range of 100-450µm, preferably in the range of 200-450µm, preferably in the range of 300-450µm. In a further embodiment, the salt-starch powder comprises 18 to 82% of salt (by weight of the salt-starch powder) and 18 to 82% of starch (by weight of the salt-starch powder), preferable 20 to 80% of salt and 20 to 80% of starch, preferable 25 to 75% of salt and 25 to 75% of starch, preferable 30 to 70% of salt and 30 to 70% of starch, preferable 40 to 60% of salt and 40 to 60% of starch, preferable 50% of salt and 50% of starch (by weight of the salt-starch powder). In a further embodiment, the salt-starch powder does not contain added acid, added gum, added hydrocolloid or combination thereof. Gum according to this invention is xanthan gum, carrageenan, locust bean gum, agar, alginates, guar gum, arabic gum, gellan or combination thereof. In case a native starch is used it can be beneficial if the mixture of native starch, salt and water is heated (cooked) to a temperature between 60-100°C for at least 30 sec, preferably between 0.5-15min. This heating (cooking) leads the native starch starting material to be a swollen starch granule or partly gelatinized starch resulting in an even harder tablet/cube.

The particle size Dv50 is used in the conventional sense as the median of the particle size distribution. Median values are defined as the value where half of the population reside above this point, and half resides below this point. The Dv50 is the size in micrometer that splits the volume distribution with half above and half below this diameter. The particle size distribution may be measured by laser light scattering, microscopy or microscopy combined with image analysis. For example, the particle size distribution may be measured by laser light scattering. Since the primary result from laser diffraction is a volume distribution, the Dv50 cited is the volume median.

The drying step can be carried out by any commonly known drying technique such as air drying, oven drying, drum drying, vacuum drying, bed drying, microwave-vacuum drying, infrared radiation drying or combinations thereof. The drying step does not include spray drying. In an embodiment of the invention the drying is done at a temperature between 65 to 120°C, preferably between 65 to 100°C, preferably between 65 to 90°C, preferably between 65 to 80°C. Before drying the salt-starch mass has a viscosity of at least 600mPa.s, preferably at least 800mPa.s, preferably at least 1000mPa.s. For spray drying a viscosity of below 350mPa.s is used. In the presence of particles in the slurry, further considerable reduction of the maximum viscosity in the spray drying feed is usually essential to avoid clogging of the spray dryer atomiser. Viscosity is measured with Rheometer at shear rate of 10 s⁻¹ using MCR300 rheometer with measuring cylinder CC27 and TEZ150P Peltier thermostatting unit (Anton Paar GmbH, Germany).

Milling according to this invention is a process that breaks solid materials into smaller pieces by grinding, crushing, or cutting. Milling can be carried out by any commonly known milling techniques such as roll mill, hammer mill, chopper mill, ball mill, SAG mil, rod mil or combinations thereof.

In a further embodiment "dry salt-starch powder" according to this invention has a water activity below 0.35, preferably below 0.30, preferably between 0.1-0.3. Wetted starch has a water activity of at least 0.6, preferably at least 0.7. The salt-starch mass is in a powdered form (free flow-able powder) and not in form of a gel.

"Flow-ability" means flow properties on how easily a powder flows. Flow-ability (*ff_{c}*) is quantified as the ratio of consolidation stress *σ*₁ to unconfined yield strength *σ_{c}* according to "Schulze, D. (2006). Flow properties of powders and bulk solids. Braunschweig/Wolfenbuttel, Germany: University of Applied Sciences." In an embodiment flow-ability (*ff_{c}*) of the dry salt-starch mass is at least 3 at 23°C, preferably between the range of 3 to 30 at 23°C, preferably at least 4 at 23°C, preferably between the range of 4 to 25 at 23°C. In an embodiment flow-ability (*ff_{c}*) of the bouillon powder is at least 2.5 at 23°C, preferably between the range of 2.5 to 12 at 23°C, preferably between the range of 2.7 to 10 at 23°C, preferably at least 3 at 23°C, preferably between the range of 3 to 10 at 23°C, preferably between the range of 3.2 to 10 at 23°C, preferably between the range of 3.2 to 7 at 23°C. Flow-ability was measured using a Schulze Ring Shear Tester RST-01.pc according to ASTM D6467. Flow-ability measurements were carried out with pre-shear normal stress set to 2600 Pa and shear normal stress to 390, 1235, and 2080 Pa.

In an embodiment the bouillon tablet is shelf-stable over 12 months and therefore has a water activity of below 0.55, preferably between 0.10 to 0.55, preferably below 0.5, preferably between 0.1 to 0.5.

In an embodiment, the bouillon tablet has a tablet hardness of at least 90 N, preferably at least 95N, preferably at least 100N, preferably at least 110N, preferably at least 120N, preferably between 90 to 700N, preferably between 90 to 500N, preferably between 90 to 300N, preferably between 100 to 700N, preferably between 100 to 500N, preferably between 100 to 300N.

Those skilled in the art will understand that they can freely combine all features of the present invention disclosed herein. In particular, features described for different embodiments of the present invention may be combined.

### Examples

### Example 1: Process

The general procedure for preparing powders with improved bulking and tabletting properties of the invention is as follows:
1. Dissolving salt ingredients in water
2. Add starch to the solution obtained from step 1.
3. Followed by mixing
4. Drying
5. Milling (optional)

Water was placed in Thermomix TM5 (Vorwerk &Co. KG, Germany). Salt powder was weighed in PG5002S balance (Mettler-Toledo GmbH, Switzerland) and added to Thermomix. Mixing was carried out at speed setting of 3 for 3 minute at room temperature until all salt crystals were dissolved. Starch was weighed in PG5002S balance (Mettler-Toledo GmbH, Switzerland) and added to Thermomix. Mixing was again carried out at speed setting of 3 for 3 minute at room temperature until all starch were wetted and slurry was obtained. The slurry was then spread onto a baking pan; slurry thickness was maintained between 5 and 10 mm, then dried in Rational Self Cooking Centre Electric Combination Oven SCC202E (Rational AG, Germany). Drying was carried out for 12 h at 70 °C with 30% fan speed. The resulting cake was milled with FREWITT mill with sieve mesh size of 2 mm.

### Pressing of bouillon tablet/cube

Pressing of bouillon cube was carried out with Flexitab Tablet Pressing equipment (Röltgen GmbH, Germany). Approximately 3 gram of bouillon powder was fed to tableting mould (14 mm in length and 14 mm in width) and pressed with force between 5.0 and 6.0 kN.

### Hardness measurement of tablet/cube

Hardness measurement was carried out using Texture Analyser TA-HDplus (Stable Micro System, UK) equipped with 250 kg load cell and P/75 compression platen. Texture Analyser test mode was set to "Compression" with pre-test speed of 1 mm/s, test speed of 0.5 mm/s, post-test speed of 10 mm/s, target mode of "Distance", distance of 4 mm, halt time was set to "No", way back of 10 mm, trigger type to "Auto(Force)", and trigger force of 50 gram. Hardness is measured not in the orientation where the tablet/cube were originally pressed in Flexitab; but from the side. Hardness measurement was carried out in 10 replication.

### Example 2-4: Comp. Process

In case the starch or flour and salt are dry-mixed (without any further processing step), the resulting mixes cannot be tableted upon compaction using our tableting system.

| | Comp Ex. 2 | Comp. Ex 3 | Comp. Ex. 4 |
|---|---|---|---|
| Starch type | Pre-gelatinised potato starch | Pre-gelatinised corn starch | Wheat flour |
| Starch [gram] | 50 | 50 | 50 |
| Salt NaCl [gram] | 50 | 50 | 50 |
| Water activity [-] | 0,31 | 0,25 | 0,27 |
| FFC at 23 °C | 2.8 | 2.7 | |
| Tablet hardness | n.a. | n.a. | n.a. |
| Remarks | Remain powder upon compaction | Remain powder upon compaction | Remain powder upon compaction |

### Example 5-7: Comp. Process

Comp. examples 5 to 7 were processed according to the process of example 1 by replacing a salt-water solution with pure water. This means, that starch has been mixed with pure water only and dried again. The resulting starch has been mixed with dry salt (no salt-water solution) and the resulting dry mixes cannot be tableted upon compaction and remain as powder using our tableting system. This shows, that a compaction can only be achieved with the process of our invention (starch added to a water-salt solution, further mixed and afterwards dried the resulting mixes can be tableted upon compaction using our tableting system).

| | Comp Ex. 5 | Comp. Ex 6 | Comp. Ex. 7 |
|---|---|---|---|
| Starch type | Pre-gelatinised potato starch | Pre-gelatinised corn starch | Wheat flour |
| Starch [gram] | 50 | 50 | 50 |
| Salt NaCl [gram] | 50 | 50 | 50 |
| Water [gram] | 200 | 200 | 200 |
| Water activity [-] | 0,25 | 0,24 | 0,26 |
| Tablet hardness | n.a. | n.a. | n.a. |
| Remarks | Remain powder upon compaction | Remain powder upon compaction | Remain powder upon compaction |

### Examples 8-10: Different origin of starch

Different kind of starches have been tested according to the process of example 1. In case the starch has been added to a water-salt solution, further mixed and afterwards dried the resulting mixes can be tableted upon compaction using our tableting system. Within example 10, in between mixing and drying, the slurry was subjected to heating. When slurry temperature reaches 85 °C, the temperature is maintained for 5 minute. Then the resulting slurry was subjected to drying.

| | Ex. 8 | Ex. 9 | Ex. 10 |
|---|---|---|---|
| Starch type | Pre-gelatinised potato starch | Pre-gelatinised corn starch | Wheat flour |
| Starch [gram] | 50 | 50 | 50 |
| Salt NaCl [gram] | 50 | 50 | 50 |
| Water [gram] | 200 | 200 | 200 |
| Water activity [-] | 0,30 | 0,28 | 0,30 |
| FFC at 23 °C | 17 | 16 | |
| Tablet hardness [N] | 734 | 850 | 762 |
| Remarks | Good tablet, sharp (not brittle) edge, good crumbliness | Good tablet, sharp (not brittle) edge, good crumbliness | Good tablet, sharp (not brittle) edge, good crumbliness |

Within examples 8-9 it is shown that the flow-ability of the dry salt-starch mass has a value between 16-17 and is much higher as shown within comparison examples 2-3 having a flow-ability value between 2.7-2.8.

The dissolution time of the tablet of example 8 is only 23 sec. This is surprising as the tablet is much harder compared to a normal bouillon tablet of approximately 150-200N and a dissolution time between 30-45 sec.

### Examples 11-14: Different ratio starch-salt

Different starch-salt ratios have been tested according to the process of example 1. Comparative example 11 shows the result if pure salt is used. Comparative example 14 shows the result if starch is mixed with pure water (without water-salt solution), dried and pressed afterwards. This shows, that a compaction can only be achieved with the process of our invention (starch added to a water-salt solution, further mixed and afterwards dried the resulting mixes can be tableted upon compaction using our tableting system).

| | Comp Ex. 11 | Ex. 12 | Ex. 13 | Comp. Ex. 14 |
|---|---|---|---|---|
| Pre-gelatinised potato starch [gram] | 0 | 20 | 80 | 100 |
| Salt NaCl [gram] | 100 | 80 | 20 | 0 |
| Water [gram] | n.a. | 200 | 200 | 200 |
| Water activity [-] | n.a. | 0,28 | 0,26 | 0,28 |
| Tablet hardness [N] | n.a. | 1454 | 272 | n.a. |
| Remarks | Remain powder upon compaction | good crumbliness | good crumbliness | Remain powder upon compaction |

### Examples 15-16: Different ratio of water

| | Ex. 15 | Ex. 16 |
|---|---|---|
| Pre-gelatinised potato starch [gram] | 50 | 50 |
| Salt NaCl [gram] | 50 | 50 |
| Water [gram] | 400 | 700 |
| Water activity [-] | 0,25 | 0,27 |
| Tablet hardness [N] | 702 | 812 |
| Remarks | | |

The minimum of ration of salt to water is 1:2.8 to obtain a saturated water-salt-solution. Examples 15 and 16 shows that higher amount of water can be used without having a significant influence on the obtained salt-starch mass and obtained hardness. During the drying step a saturated water-salt-solution will be obtained anyway.

### Example 17-18: Process of starch cooking

In example 17 native starch was processed according to Example 1. Within example 18, in between mixing and drying, the slurry was subjected to heating. When slurry temperature reaches 85°C, the temperature is maintained for 5 minute. Then the resulting slurry was subjected to drying.

| | Ex. 17 | Ex. 18 |
|---|---|---|
| Native potato starch [gram] | 50 | 50 |
| Salt NaCl [gram] | 50 | 50 |
| Water [gram] | 200 | 200 |
| Water activity [-] | 0,28 | 0,28 |
| Tablet hardness [N] | 406 | 873 |

### Example 19: Different salt origin

| | Ex. 19 |
|---|---|
| Pre-gelatinised potato starch [gram] | 50 |
| Salt KCI [gram] | 50 |
| Water [gram] | 250 |
| Water activity [-] | 0,30 |
| Tablet hardness [N] | 752 |
| Remarks | Similar behaviour to NaCl |

### Examples 20-31: Application in bouillon cubes

### Preparation of bouillon powder

All bouillon powder ingredients were weighted in PG5002S balance (Mettler-Toledo, USA) and then mixed in Thermomix TM5 (Vorwerk &Co. KG, Germany). Mixing was carried out at speed setting of 3 for 30 s with propeller rotation was set to reverse direction. The resulting powder was then stored in a climate chamber ICH-110 (Memmert GmbH, Germany) at 25 °C with 48 % relative humidity with fan speed of 40 % for 24 h at prior to pressing.

### Water activity measurement

Water activity was measured with Hygrolab HC2-aw-USB (Rotronic AG, Switzerland) connected to PC with HW4-P-QUICK-Vx software (Rotronic AG, Switzerland). Measurement were carried out at 25.0 ±0.5 °C according to AOAC 978.18-1978, Water activity of canned vegetables.

### Flow-ability

Flow-ability was measured using a Schulze Ring Shear Tester RST-01.pc according to ASTM D6467. Flow-ability measurements were carried out with pre-shear normal stress set to 2600 Pa and shear normal stress to 390, 1235, and 2080 Pa.

### Pressing of bouillon tablet/cube and hardness measurement of tablet/cube

Pressing of bouillon cube and hardness measurement was carried out as described above.

| **Recipe** | **Comp. Ex. 20** | **Comp. Ex. 21** |
|---|---|---|
| Salt [g] | 58 | 29 |
| Pre-gelatinised potato starch [gram] | 0 | 29 |
| Sugar [g] | 11 | 11 |
| MSG [g] | 9 | 9 |
| Filler (Native potato starch [g]) | 8 | 8 |
| Flavour [g] | 9 | 9 |
| Oil [g] | 4 | 4 |
| Spices [g] | 1 | 1 |
| FFC at 23 °C | 2,6 | 2,4 |
| Water activity [-] | 0,48 | 0,49 |
| Average Hardness [N] | 74 | 39 |
| Tablet breakage [%] | 10 | 70 |

| Recipe | **Ex. 22** | **Ex. 23** | **Ex. 24** |
|---|---|---|---|
| Type of starch | Pre-gelatinised potato starch | Pre-gelatinised corn starch | Wheat flour |
| Co processed starch-salt [g] | 58 | 58 | 58 |
| Ratio of starch : salt [wt%] | 50:50 | 50:50 | 50:50 |
| Salt [g] | 0 | 0 | 0 |
| Sugar [g] | 11 | 11 | 11 |
| MSG [g] | 9 | 9 | 9 |
| Filler (Native potato starch [g]) | 8 | 8 | 8 |
| Flavour [g] | 9 | 9 | 9 |
| Oil [g] | 4 | 4 | 4 |
| Spices [g] | 1 | 1 | 1 |
| FFC at 23 °C | 4,1 | 3,8 | 4,0 |
| Water activity | 0,46 | 0,46 | 0,46 |
| Average Hardness [N] | 210 | 198 | 239 |
| Tablet breakage [%] | <2 | <2 | <2 |

| **Recipe** | **Ex. 25** | **Ex. 26** | **Comp.Ex. 27** |
|---|---|---|---|
| Salt [g] | 0 | 0 | 0 |
| Sugar [g] | 11 | 11 | 11 |
| MSG [g] | 9 | 9 | 9 |
| Filler (Native potato starch [g]) | 8 | 8 | 8 |
| Flavour [g] | 9 | 9 | 9 |
| Oil [g] | 4 | 4 | 4 |
| Spices [g] | 1 | 1 | 1 |
| Co processed pre-gelatinised potato starch-salt [g] | 58 | 58 | 58 |
| Ratio of pre-gelatinised potato starch : salt [wt%] | 20:80 | 80:20 | 100:0 |
| FFC at 23 °C | 4,1 | 3,6 | 3,1 |
| Water activity | 0,46 | 0,47 | 0,46 |
| Average Hardness [N] | 354 | 109 | 66 |
| Tablet breakage [%] | <2 | <3 | 45 |

| **Recipe** | **Ex. 28** | **Ex. 29** | **Ex. 30** | **Ex. 31** |
|---|---|---|---|---|
| Salt [g] | 29 | 29 | 29 | 46 |
| Sugar [g] | 11 | 11 | 11 | 11 |
| MSG [g] | 9 | 9 | 9 | 9 |
| Filler (Native potato starch [g]) | 8 | 8 | 8 | 8 |
| Flavour [g] | 9 | 9 | 9 | 9 |
| Oil [g] | 4 | 4 | 4 | 0 |
| Palm fat [g] | 0 | 0 | 0 | 6 |
| Spices [g] | 1 | 1 | 1 | 1 |
| Co processed pre-gelatinised potato starch-salt [g] | 29 | 29 | 29 | 10 |
| Ratio of pre-gelatinised potato starch : salt [wt%] | 20:80 | 50:50 | 80:20 | 50:50 |
| FFC at 23 °C | 4,4 | 4,0 | 3,9 | 3,4 |
| Water activity | 0,48 | 0,46 | 0,46 | 0,40 |
| Average Hardness [N] | 149 | 118 | 94 | 108 |
| Tablet breakage [%] | <2 | <2 | 5 | <3 |

Comparative example 20 shows a tablet using pure salt without using a co-processed salt-starch mass. Comparative example 21 shows a tablet using a dry mix of salt and starch without using a co-processed salt-starch mass. Compared to pure salt the hardness of the tablet is reduced by using a dry starch-salt mix instead of pure salt. Comparative example 27 shows a tablet using only starch without using a co-processed salt-starch mass. Example 22 shows the effect of a co-processed salt-starch mass according to the invention compared to comparison example 21 using only a dry mix of salt and starch without using a co-processed salt-starch mass. The flow-ability of the bouillon powder is higher and the tablet hardness is much higher, which shows that the co-processed salt-starch mass according to the invention leads to a new binding system. Examples 22 to 26 and examples 28 to 31 shows that the invention works with different starches, at different salt-starch ratios and different amount of the salt-starch-mass. All tablets from examples 22 to 26 and examples 28 to 31 have a good crumbliness. Examples 28 to 31 have in addition to the co-processed salt-starch mass providing the binding of the bouillon tablet also standard sodium chloride in the recipe.

## Claims

1. A process for the production of a salt-starch powder, the process comprising the steps of:
a) mixing salt, starch and water before, during or after dissolution of the salt in the water;
b) drying the mixture of step a) to obtain a dry salt-starch mass; and
c) milling the dry salt-starch mass to obtain a salt-starch powder;
wherein the salt is selected from the group consisting of sodium chloride, potassium chloride, ammonium chloride or a combination thereof and wherein the salt-starch powder comprises 18 to 82wt% salt and 18 to 82wt% starch and wherein the salt is dissolved in the water at a ratio between 1:2.8 to 1:20 and wherein the drying is done at a temperature between 65 to 120°C.

2. A process for the production of a salt-starch powder as claimed in claim 1, wherein the starch in step b) is a native or pre-gelatinized starch or cold swelling starch or combination thereof.

3. A process for the production of a salt-starch powder as claimed in any one of claims 1 to 2, wherein the starch is selected from at least one of maize, waxy maize, high amylose maize, wheat, tapioca, rice, potato, cassava or combination thereof.

4. A process for the production of a salt-starch powder as claimed in any one of claims 1 to 3, wherein the dry salt-starch mass has a water activity below 0.35 and wherein the water activity was measured with Hygrolab HC2-aw-USB connected to PC with HW4-P-QUICK-Vx software at 25.0 ±0.5 °C according to AOAC 978.18-1978.

5. A process for the production of a salt-starch powder as claimed in any one of claims 1 to 4, wherein the starch of step a) are mixed after dissolution of the salt in the water.

6. A process for the production of a salt-starch powder as claimed in any one of claims 1 to 5, wherein the salt-starch powder comprises 20 to 80wt% salt and 20 to 80wt% starch.

7. A process for the production of a salt-starch powder as claimed in any one of claims 1 to 6, wherein the mixture of step a) has a viscosity of at least 600mPa.s and wherein the viscosity is measured with Rheometer at shear rate of 10 s⁻¹ using MCR300 rheometer with measuring cylinder CC27 and TEZ150P Peltier thermostatting unit.

8. A process for the production of a salt-starch powder as claimed in any one of claims 1 to 7, wherein the drying is done by oven drying, air drying, drum drying, vacuum drying, bed drying, microwave-vacuum drying, infrared radiation drying or combination thereof.

## Patentansprüche

1. Verfahren für das Herstellen eines Salz-Stärke-Pulvers, das Verfahren umfassend die Schritte:
a) Mischen von Salz, Stärke und Wasser vor, während oder nach einem Auflösen des Salzes in dem Wasser;
b) Trocknen der Mischung von Schritt a), um eine trockene Salz-Stärke-Masse zu erhalten; und
c) Mahlen der trockenen Salz-Stärke-Masse, um ein Salz-Stärke-Pulver zu erhalten;
wobei das Salz aus der Gruppe ausgewählt ist, bestehend aus Natriumchlorid, Kaliumchlorid, Ammoniumchlorid oder einer Kombination davon, und wobei das Salz-Stärke-Pulver zu 18 bis 82 Gew.-% Salz und zu 18 bis 82 Gew.-% Stärke umfasst, und wobei das Salz in einem Verhältnis zwischen 1 : 2,8 und 1 : 20 in dem Wasser gelöst ist, und wobei das Trocknen bei einer Temperatur zwischen 65 und 120 °C erfolgt.

2. Verfahren für das Herstellen eines Salz-Stärke-Pulvers nach Anspruch 1, wobei die Stärke in Schritt b) eine native oder vorverkleisterte Stärke oder eine kaltquellende Stärke oder eine Kombination davon ist.

3. Verfahren für das Herstellen eines Salz-Stärke-Pulvers nach einem der Ansprüche 1 bis 2, wobei die Stärke aus mindestens einem von Mais, Wachsmais, Mais mit hohem Amylosegehalt, Weizen, Tapioka, Reis, Kartoffel, Maniok oder einer Kombination davon ausgewählt ist.

4. Verfahren für das Herstellen eines Salz-Stärke-Pulvers nach einem der Ansprüche 1 bis 3, wobei die trockene Salz-Stärke-Masse eine Wasseraktivität unter 0,35 aufweist und wobei die Wasseraktivität mit einem Hygrolab HC2-aw-USB, der an einen PC mit HW4-P-QUICK-Vx-Software angeschlossen ist, bei 25,0 ±0,5 °C gemäß AOAC 978.18-1978 gemessen wurde.

5. Verfahren für das Herstellen eines Salz-Stärke-Pulvers nach einem der Ansprüche 1 bis 4, wobei die Stärke von Schritt a) nach dem Auflösen des Salzes in dem Wasser gemischt wird.

6. Verfahren für das Herstellen eines Salz-Stärke-Pulvers nach einem der Ansprüche 1 bis 5, wobei das Salz-Stärke-Pulver zu 20 bis 80 Gew.-% Salz und zu 20 bis 80 Gew.-% Stärke umfasst.

7. Verfahren für das Herstellen eines Salz-Stärke-Pulvers nach einem der Ansprüche 1 bis 6, wobei die Mischung von Schritt a) eine Viskosität von mindestens 600 mPa.s aufweist, und wobei die Viskosität mit einem Rheometer mit einer Scherrate von 10 s⁻¹ unter Verwendung eines MCR300-Rheometers mit Messzylinder CC27 und TEZ150P-Peltier-Thermostateinheit gemessen wird.

8. Verfahren für das Herstellen eines Salz-Stärke-Pulvers nach einem der Ansprüche 1 bis 7, wobei das Trocknen durch Ofentrocknung, Lufttrocknung, Trommeltrocknung, Vakuumtrocknung, Betttrocknung, Mikrowellenvakuumtrocknung, Infrarotstrahlungstrocknung oder eine Kombination davon erfolgt.

## Revendications

1. Procédé de production d'une poudre de sel et d'amidon, le procédé comprenant les étapes consistant à :
a) mélanger du sel, de l'amidon et de l'eau avant, pendant ou après la dissolution du sel dans l'eau ;
b) sécher le mélange de l'étape a) pour obtenir une masse sèche de sel et d'amidon ; et
c) moudre la masse sèche de sel et d'amidon pour obtenir une poudre de sel et d'amidon ;
dans lequel le sel est choisi dans le groupe constitué de chlorure de sodium, chlorure de potassium, chlorure d'ammonium ou une combinaison de ceux-ci et dans lequel la poudre de sel et d'amidon comprend de 18 à 82 % en poids de sel et de 18 à 82 % en poids d'amidon et, dans lequel le sel est dissous dans l'eau dans un rapport compris entre 1:2,8 et 1:20 et dans lequel le séchage est réalisé à une température comprise entre 65 et 120 °C.

2. Procédé de production d'une poudre de sel et d'amidon selon la revendication 1, dans lequel l'amidon de l'étape b) est un amidon natif ou prégélatinisé ou un amidon gonflant à froid ou une combinaison de ceux-ci.

3. Procédé de production d'une poudre de sel et d'amidon selon l'une quelconque des revendications 1 à 2, dans lequel l'amidon est choisi parmi au moins un maïs, maïs cireux, maïs à haute teneur en amylose, blé, tapioca, riz, pomme de terre, manioc ou combinaison de ceux-ci.

4. Procédé de production d'une poudre de sel et d'amidon selon l'une quelconque des revendications 1 à 3, dans lequel la masse sèche de sel et d'amidon a une activité d'eau inférieure à 0,35 et dans lequel l'activité d'eau a été mesurée avec l'Hygrolab HC2-aw-USB connecté à un PC avec le logiciel HW4-P-QUICK-Vx à 25,0 ± 0,5 °C selon la norme AOAC 978.18-1978.

5. Procédé de production d'une poudre de sel et d'amidon selon l'une quelconque des revendications 1 à 4, dans lequel l'amidon de l'étape a) est mélangé après dissolution du sel dans l'eau.

6. Procédé de production d'une poudre de sel et d'amidon selon l'une quelconque des revendications 1 à 5, dans lequel la poudre de sel et d'amidon comprend 20 à 80 % en poids de sel et 20 à 80 % en poids d'amidon.

7. Procédé de production d'une poudre de sel et d'amidon selon l'une quelconque des revendications 1 à 6, dans lequel le mélange de l'étape a) a une viscosité d'au moins 600 mPa.s, et dans lequel la viscosité est mesurée avec un rhéomètre à un taux de cisaillement de 10 s⁻¹ à l'aide d'un rhéomètre MCR300 avec un cylindre de mesure CC27 et une unité thermostatique Peltier TEZ150P.

8. Procédé de production d'une poudre de sel et d'amidon selon l'une quelconque des revendications 1 à 7, dans lequel le séchage est réalisé par séchage au four, séchage à l'air, séchage au tambour, séchage à vide, séchage à lit fluidisé, séchage à vide par micro-ondes, séchage à rayonnement infrarouge ou combinaisons de ceux-ci.
